# EUROPEAN PATENT SPECIFICATION

(11) **EP 1 990 308 B1**
(45) Date of publication and mention of the grant of the patent: **31.03.2010**
(21) Application number: 07107995.8
(22) Date of filing: 11.05.2007
(51) Int. Cl.: B66F 9/06, B62D 5/04

(54) **A method and a system for power steering**
Verfahren und System für Lenkhilfen
Procédé et système de direction assistée

(43) Date of publication of application: 12.11.2008
(73) Proprietor: BT Products AB, 595 81 Mjölby (SE)
(72) Inventor: Stenberg, Kurt-Ove, 595 44 Mjölby (SE); Lundén, Mats, 595 52 Mjölby (SE)
(74) Representative: Hyltner, Jan-Olof

(56) References cited:
- EP-A- 1 772 344
- DE-A1-102004 017 859
- DE-B3- 10 338 611

## Description

### FIELD OF THE INVENTION

The present invention relates to a method and a system for power steering. Especially, the invention relates to a method and system for assisting turning a steered wheel in a steering system.

### BACKGROUND OF THE INVENTION

In the field of steering, power-steering systems have been used for a long time. In power assisted steering systems the steering force is produced by the muscular energy of an operator and by an energy source. The energy source may consist of a pump, a fluid reservoir, a motor and various hoses, wires and pipes. An assisted power steering system for a tiller arm truck consists of an analogue steering sensor, a motor controller and a motor. The steering sensor detects the level of power that affects the tiller arm during steering. At a signal generated by the steering sensor the motor turns the steered wheel in the direction that reduces the steering power, wherein the steering sensor signal is reduced.

In a tiller arm truck a torque may be transferred from the tiller arm to the steered wheel via a torsion arrangement. An assisted power steering system may be used if it is desirable to reduce the steering forces on the tiller arm; this is enabled in that the torsion rod is provided with a momentum sensor. The task of the power steering system is that based on the current momentum from the torsion rod to turn the steered wheel so that the steering force may be kept under a certain desired level.

Generally, a common way to realise a torsion momentum sensor is to provide a torsion rod that consists of a rod that has been divided into two parts and the parts has been joined by a spring element, which results in that when one part of the rod is turned the second part is turned as well by the spring element. If, during this turning process, a momentum is transferred an angle difference arises as a function of momentum between the rod parts. The angle difference is a measure of the momentum. This difference can be translated to a distance by attaching an analogue distance measuring device at one of the rod parts, at a suitable distance from the rotation centre of the rod. The device measures towards a measuring point at the same distance from the rotation centre of the rod but attached at the other (opposite) rod part. The analogue measuring value of the distance becomes a measurement of the transferred momentum and may be used as an input to the assisted power steering system. Different devices may be used to measure the distance, such as optical, magnetic, resistive, or the like, between peripheral measuring points at both parts of the torsion rod.

The above stated systems comprising the analogue solution are generally relatively expensive and have problems with the tuning of the system and stability over a long term period due to mechanical and electrical tolerances. The use of analogue sensors results in that the sensors need to be tuned in, in order to find the centre position of the tiller arm. This tuning process is time consuming and expensive. The analogue sensor as safety measure also needs a second analogue sensor in order to check that the value read by the first analogue is the same as the second value,

Similar systems are known from the following documents:

DE 102004017859 A1 describes an assisted power steering system which comprises an analogous sensor arranged to detect the magnitude of the relative displacement of a tiller arm head and a tiller arm bar as a measure of applied force. The detected magnitude is used in a control system to control a steering motor to assist the turning of the drive wheel of the truck accordingly.

DE 103 38 611 B3 describes a truck comprising a power steering system including load sensors arranged to detect the force that the driver of the truck applies when steering the truck. The signals from the load sensors control the steering motor of the track to assist the turning of the truck.

DE 1772 344 A2 describes a truck comprising a power steering system including several analogous sensors arranged to detect the torque that the driver of the truck applies during turning of a steering console of the truck.

An object of the invention is to provide a system that facilitates the manufacturing of the assisted power steering system with a satisfactory result and thereby produce an end result with higher and more reliable quality to a relatively low cost.

### SUMMARY OF THE INVENTION

The invention relates to a system and a method for assisting the turning of a steered wheel as claimed in claims 1 and 13.

The invention relates to an assisted power steering system for assisting a turning of a steered wheel of a steering system comprising an energy source arranged to assist the turning of the steered wheel, a sensor arrangement arranged to detect direction of the turning, and a control unit arranged to control the energy source based on data from the sensor arrangement, wherein the sensor arrangement consists of a first digital presence sensor arranged to indicate the direction of the turning.

An embodiment of the assisted power steering system discloses an energy source that is arranged to start by a change of state of the digital presence sensor.

In an embodiment the presence sensor is arranged to detect a position of an indicator element of the steering system.

The sensor arrangement may comprise a second digital presence sensor arranged to detect the turning in a direction opposite to the direction detected by the first digital presence sensor.

In an embodiment an arrangement to control the hysteresis is arranged in the system.

The sensor arrangement may further comprise a third digital presence sensor arranged on the same side of a line extending from the centre of the steering shaft through the centre of the sensor arrangement as the first digital presence sensor and a fourth digital sensor arranged on the same side of the line of the sensor arrangement as the second digital presence sensor, wherein the control unit of the system is arranged to initiate the energy source to merely assist the turning when both the first and the third sensor indicates a presence of an indicator element or when both the second and the fourth sensor indicates a presence of an indicator element or that the different sensors generate different assisting forces.

The invention further discloses a steering system comprising a steering means, such as a tiller arm, a steering wheel or the like, a first upper part connected with a deflection element to a second lower part, a steered wheel connected to the second lower part and an assisted power steering system according to an embodiment stated above.

The first upper part may comprise an indicator element and the presence sensor is arranged to detect the presence of the indicator element.

In an embodiment a shelf arrangement is secured to the second lower part of the system and the digital sensor is arranged on the shelf arrangement.

Furthermore, may the second lower part comprise a stopper tap arranged to limit the angle difference between the tiller arm and the steered wheel, wherein an operator of the tiller arm will turn the steered wheel by own force when the first upper part engages the stopper tap.

In addition, a vehicle, such as an industrial truck, a tiller arm truck, or the like, comprising a steering system according to the invention is disclosed

The invention further relates to a method for assisting the turning of a steered wheel of a steering system comprising the steps of: turning a steering means, such as a tiller arm, a steering wheel or the like,of the steering system; detecting an angle difference of the tiller arm and the steered wheel by a digital presence sensor; and assisting the turning of the steered wheel by providing a turning force to the steered wheel from an energy source when said detection has been made and thereby reducing the angle difference.

The system provides a robust system to a low cost that is easy to operate and manufacture.

In an embodiment of the invention using multiple sensors in each direction every presence sensor may generate a predetermined steer force/velocity on the steered wheel. Thereby, the assisting force/velocity may be changed due to different angle differences between the tiller arm and the steered wheel.

### BRIEF DESCRIPTION OF THE DRAWINGS

The invention, together with further objectives and advantages thereof, may best be understood by reference to the following description taken in conjunction with the accompanying drawings in which:
Figure 1 shows a schematic top view of an industrial truck;
Figure 2 shows a schematic overview of a steering system with assisted power steering;
Figure 3 shows a schematic overview of an embodiment of a sensor arrangement;
Figure 4 shows a schematic top view of an embodiment of a sensor arrangement;
Figure 5 shows an embodiment of a sensor with its sensor points;
Figure 6 shows an embodiment of a sensor arrangement;
Figures 7A and 7B illustrate the function of the embodiment in figure 6;
Figure 8 shows the angles and distances of the embodiment in figure 6;
Figure 9 shows the reading of the sensor in the embodiment in figure 6;
Figure 10 illustrates an embodiment of the sensor arrangement;
Figures 11A-11C show the embodiment in figure 10 at different operation positions;
Figure 12 illustrates the readings from the sensors in the embodiment shown in figure 10;
Figure 13 shows sensor areas of an embodiment of a sensor arrangement;
Figure 14 shows angles of different sensor areas of the embodiment in figure 13;
Figure 15 shows the reading from the sensors in figure 14;
Figures 16A-16C show different steering arrangements;
Figure 17A shows an embodiment of a steering arrangement utilising a sensor arrangement;
Figure 18 shows a schematic overview of an assisted power steering system; and
Figure 19 shows a method for assisting the turning of a steered wheel.

### DETAILED DESCRIPTION OF EMBODIMENTS OF THE INVENTION

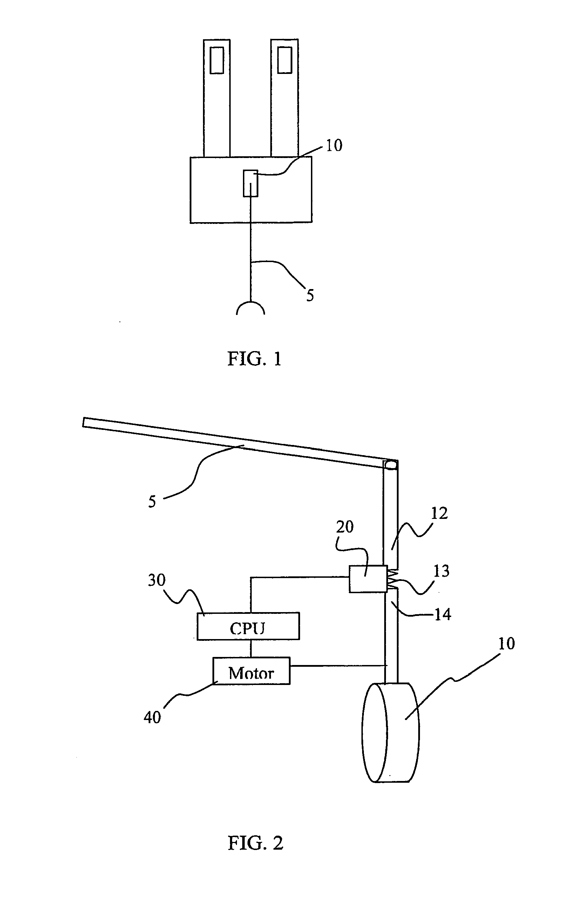

In an embodiment of the invention the assisted power steering system is implemented in an industrial truck as shown in figure 1. The illustrated industrial truck comprises a tiller arm 5 and a steered wheel 10. The assisted power steering system is to assist the turning of the steered wheel 10 operating the tiller arm 5.

In figure 2 a schematic overview of a steering system with an assisted power steering is shown. A tiller arm 5 is connected to a rotation arrangement that is divided into two parts, an upper 12 and a lower part 14. Between the upper part 12 and the lower part 14 an elastic deformation 13 is provided. The elastic deformation 13 is arranged to force the lower part 14 to follow the rotation of the upper part 12, however, an angle difference will occur between the upper part 12 and the lower part 14 when the tiller arm 5 is turned due to the applied torque. The angle difference is detected by a sensor arrangement 20 and the sensor arrangement 20 transmits the detection data to a control unit 30 that is arranged to initiate an energy source 40, such as a steer motor or the like. The energy source then assists the turning of the lower part by applying a pre set force to the lower part reducing the angle difference.

It should be understood that the assisting force may also come from an energy source 40 such as a pneumatic, hydraulic system or the like.

A digital presence sensor is arranged to be able to be in two states, either an on-state or an off-state. The sensor may indicate that an element is in the detection area of the sensor by being in the on-state and that no element is in the detection area by being in the off-state. However, the sensor may indicate the other way around, that is, being in an off-state when an element is in the area and in an on-state when no element is in the area.

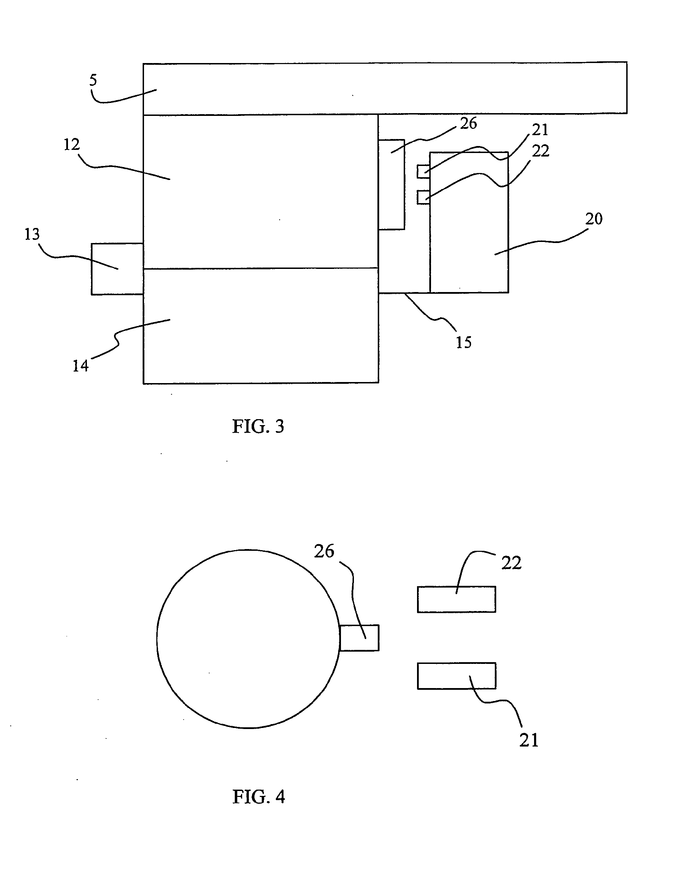

As shown in figures 3 and 4, an embodiment of the invention comprises two standard commercially available digital presence sensors 21, 22. A first digital sensor 21 signals when a momentum has reached a value level, a distance in turning due to the applied force, in a first direction and a second digital sensor 22 signals when the momentum has reached a value level, , in the other direction. It should be noted that alternatively may one, two or more digital sensors be used to signal a plurality of momentum levels in both directions.

By using at least two digital sensors 21, 22 the detection of error is facilitated and the requirement of redundant system may be eliminated.

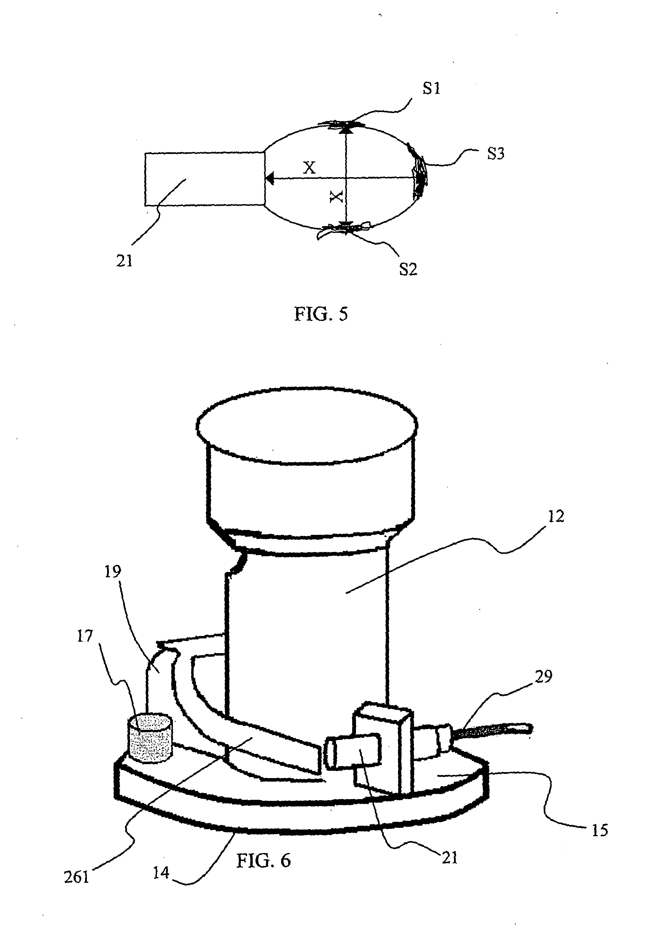

The invention relates to replace the analogue steering sensor with one, two or more digital presence (on/off) sensors. The force on the tiller arm 5 is transferred mechanically to a torque momentum on the steered wheel 10. On the way from the arm 5 to the wheel 10 a flexibility 13 is introduced, such as an elastic deflection, which implies that when force is applied to the tiller arm 5 the tiller arm will move without a corresponding turning distance of the steered wheel. The difference in movement (position) over a certain value is detected in each direction of the digital sensors 21, 22. The maximum difference between tiller arm 5 and steered wheel 10 is limited to be slightly larger than the operation area of the sensors since this is an assisted power steering system. This is achieved by implementing a stopper arrangement such as detail 17 in figure 6.

The illustrated embodiment in figure 3 comprises an upper part 12 arranged to rotate accompanying the tiller arm 5. An elastic deformation 13 is arranged to transfer the torque of the upper part 12 to a lower part 14. The sensor arrangement 20 shown in figure 3 comprises two digital presence sensors 21, 22 arranged on either side of an indicator element 26, as shown in figure 4. Furthermore, the sensor arrangement is secured to the lower part 14 on a shelf arrangement 15. The indicator element 26 is secured to the upper part 12 of the rotating arrangement. It should be noted that the sensor arrangement could be arranged on the upper part and the indicator could be arranged on the lower part.

Dependent on the type of sensor the optimal detection interval may vary within wide limits. By choice of sensor and gear movement one may limit the influence of tolerances in mechanics and sensors by increasing the distance the sensor can detect. The type of sensor may be magnetic, optical, micro switch or the like.

As shown in figure 5, a sensor 21 detects the presence of an indicator element entering an area, wherein the sensor senses the presence of elements. The indicator element may enter the sensor area anywhere along the peripheral of the sensor area, for example, at spots S1, S2 when the indicator element moves perpendicular to the sensor 21 and spot S3 when the indicator element moves substantially linearly towards the sensor. Hence, the placement of the sensor as well as the design of the sensor influence how, where the sensor detects the presence of an indicator element.

It should be understood that as long as the indicator travels along the sensitive distance X, the sensor indicates a true signal, that is, presence of the indicator is indicated.

The indicator element 26 may, for example, be arranged as a protruding wing from the upper part 12 secured to the tiller arm, an arm arranged at a stopper arrangement (shown in figure 6), a slot in the tiller arm arrangement or the like. The indicator element may have any shape such as vertical, with angles, horizontal or the like.

As shown in figure 6, an embodiment of the sensor arrangement may comprise an indicator element 261 that extends in front of a sensor 21. The sensor 21 is further connected to electronics through a cable 29 in order to transmit a true signal to a control unit. The embodiment further comprises a stop member 17, such as a stopper tap, to limit the differential movement between an upper part 12 and a lower part 14. The sensor 21 as well as the stopper tap 17 is arranged on a shelf arrangement 15 secured to the lower part 14. Furthermore, the illustrated embodiment in figure 6 discloses a block arrangement 19 arranged to carry the indicator element and to limit the differential movement between the upper part and the lower part.

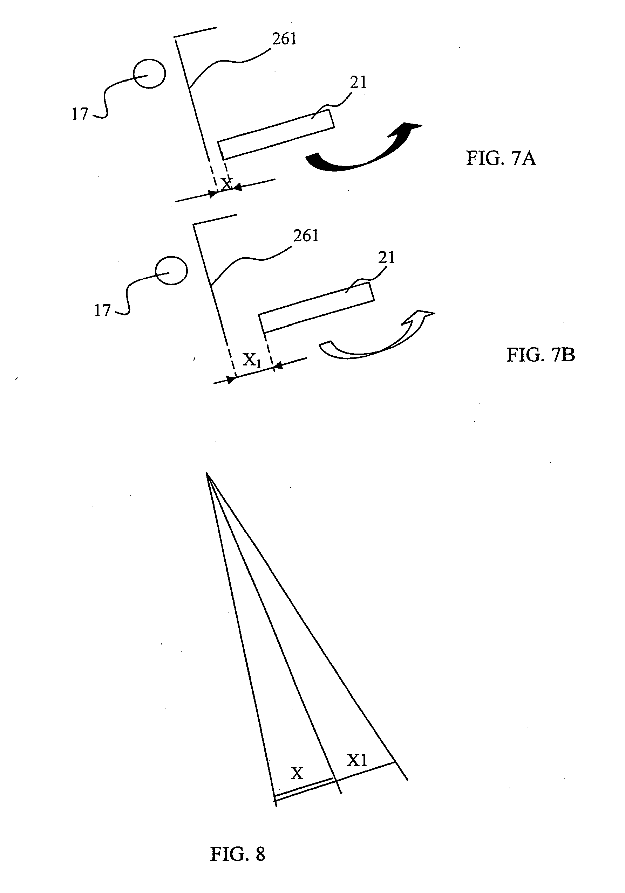

As illustrated in figures 7A and 7B the rotation of the arrangement is disclosed. In figure 7A the tiller arm is turned to the right wherein the indicator element 261 enters the presence detecting area of sensor 21, being within an X distance from the sensor (see also figure 5). When the indicator element enters the sensor area of the sensor 21, the sensor 21 sends a signal being true (may also be the opposite, that is, the sensor signal is true when no presence of the indicator element is detected. The dark arrow illustrates the rotation of the tiller arm 5 and the indicator element 261.

The control unit 30 of the assisted power steering system receives the indication that the sensor 21 is indicating that the difference in movement between the tiller arm 5 and the steered wheel 10 exceeds a pre set value. The control unit 30 controls the energy source 40, being, for example, a motor and assists the turning of the steered wheel, as illustrated in figure 7B by a light grey arrow. That is, the assisted power steering system rotates the lower part 21, 17 to reduce the angle difference, resulting in that and the indicator element 261 is displaced outside the sensor area X denoted as X1 and thereby the motor for assisting the turning of the system is turned off/disconnected.

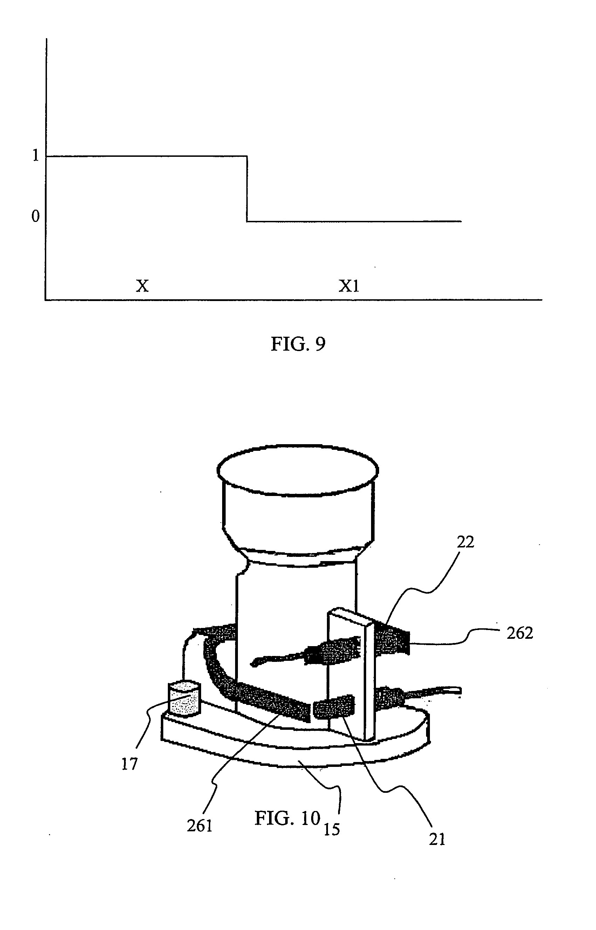

As illustrated in figure 8 the distance X is the distance wherein a presence signal is generated and the distance X1 is the distance where no indication is generated, as indicated by a signal being high or low see figure 9. As shown in figure 8, the realisation of the sensor is facilitated the longer the sensor is placed from the centre point of the rotation arrangement and the distance to detect presence may be increased resulting in a detection with a higher reliability.

By using one sensor the power steering system is designed in a manner that at the activation of the one sensor the steered wheel is assisted to turn in a first direction and when the sensor is not activated the steered wheel is assisted to turn in a second direction, that is, the opposite direction. The advantage of this embodiment is that the costs are relatively low. In an embodiment the steer motor jumps back and fourth in the centre position in order to detect turning. However, the width of the area, wherein transition from one direction to the opposite direction should occur, may be in a reasonable interval so that the steer motor does not jump back and forth when being in the centre position; one may introduce a controlled hysteresis.

In figure 10 an embodiment of a sensor arrangement is shown. The embodiment comprises a first digital sensor 21 and a second digital sensor 22 and a first indicator element 261 and a second indicator element 262, wherein both the indicator elements are secured to a block arrangement 19 and the sensors 21, 22 are secured to a shelf arrangement 15 being elastically connected to the block arrangement 19.

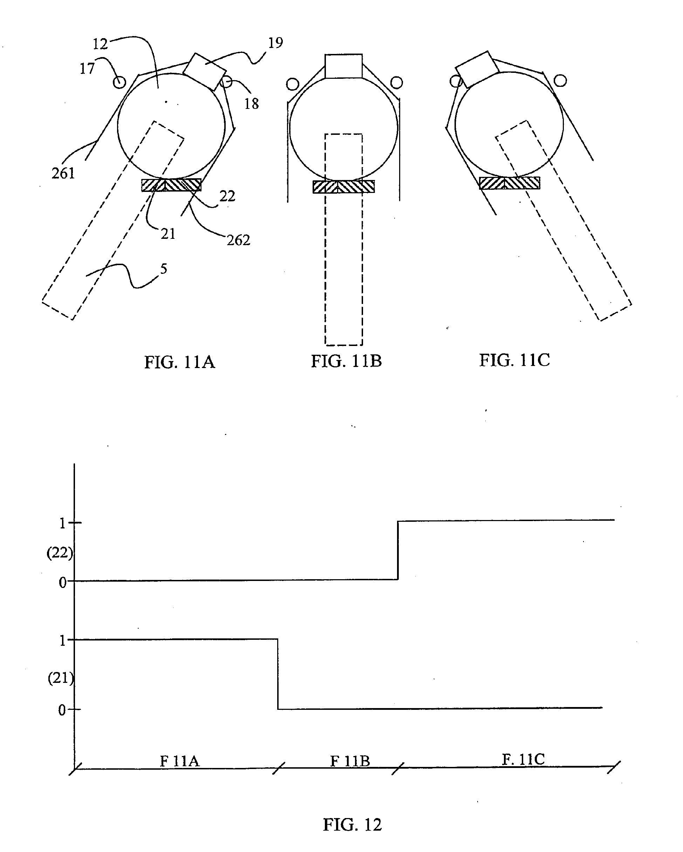

In figures 11A-11C the operation of the arrangement is shown. In figure 11B the tiller arm 5 is in a neutral position, that is, a straight centre position. However, as the tiller arm 5 is turned to the left by an operator the second indicator element 262 moves towards the sensor area of the second sensor 22, which would set of the assisted power steering reducing the angle difference between the tiller arm and the steered wheel. However, if the force applied to the tiller results in that the angle difference exceeds the sensor area the block arrangement 19 will impact with stopper tap 18 as shown in figure 11A. The operator will thereby turn the lower part and thereby the steered wheel by own force. A similar process is shown in figure 11C when turning the tiller arm 5 to the right.

By using two sensors the power steering system is designed in a manner that upon activation of the first sensor the steered wheel is turned in one direction and upon the activation of the second detector the steered wheel is turned in the other direction. Between the two detection intervals of the sensors an area may be created that does not generate a sensor signal, a silent interval, which can be advantageous for the algorithm of the regulation. The silent interval should be in a range so that small tiller arm movements do not initiate assist power steering but when it is needed when the torque of the tiller arm is bigger the assisting force will be initiated.

In figure 12, the values of the signals of the first and second digital sensors are shown. When the indicator element 261 is in the X range of the second digital sensor 22 the sensor 22 generates a high value. When the indicator element is in the area between both the sensor areas no signal is generated, that is, the indicator is in the silent interval. And when the indicator moves into the sensor area of the first digital sensor 21, the sensor 21 generates a high value sent to the control unit.

If a sensor would erroneously signal "on", the power steering system would turn the wheel so that the other sensor would output a signal. This may be used to generate an erroneous indication and stop the power steering motor. If a sensor would falsely signal "off" no dangerous movement will occur but the required strength to turn the wheel manually would be increased.

Hence, an error in a sensor may logically be detected when using one sensor in each direction. An example of an error is when a sensor is in the wrong on/off-state.

If it is desired to enhance the characteristics of the power steering mechanism than what may be achieved with merely one sensor or with one sensor in each direction the number of sensors may be increased within the limitations set by the scope of physical and economical nature.

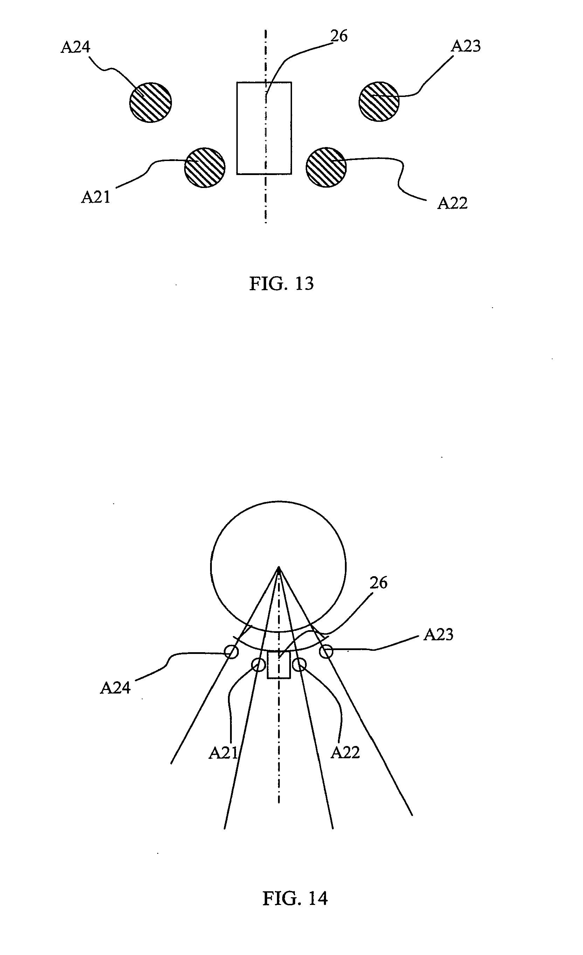

Referring to figures 13 and 14, an embodiment using four sensors are illustrated. The embodiment may be constructed in such a manner that when an indicator element 26 enters a sensor area A21 of a first left sensor a certain force/velocity may be generated to assist the turning of the steered wheel and when the indicator element 26 enters into a second area A24 of a second left sensor a different higher level of force/velocity from the assisted power steering system is generated. Similarly, the assisted power steering system generates a first level of assisting force/velocity when the indicator enters an area A22 of a first right sensor and a higher force/velocity when the indicator 26 enters an area A23 of a second right sensor. This results in an assisted power steering system with different levels of force/velocity dependent on the angle difference between the upper part and the lower part.

It should also be noted that by using four sensors a controlled hysteresis may be introduced. That is, a delay may be introduced in order to avoid that the system will jump back and fourth between the opposite directions. The system may function so that in order for the steer motor to start compensating the angle difference between the tiller arm and the steered wheel, presence indications from both a first left sensor and a second left sensor must have been received at the electronics of the system. That is, as the indicator element 26 enters into the sensor area A21 of the first left sensor the control unit will not initiate the energy source to compensate the angle difference. However, when the indicator element enters the sensor area A24 of the second left sensor the control unit of the assisted power steering system controls the energy source to compensate the angle difference. Similarly, the control unit controls the energy source when indicator element enters into sensor zones A22 and A23 of the first and the second right sensors.

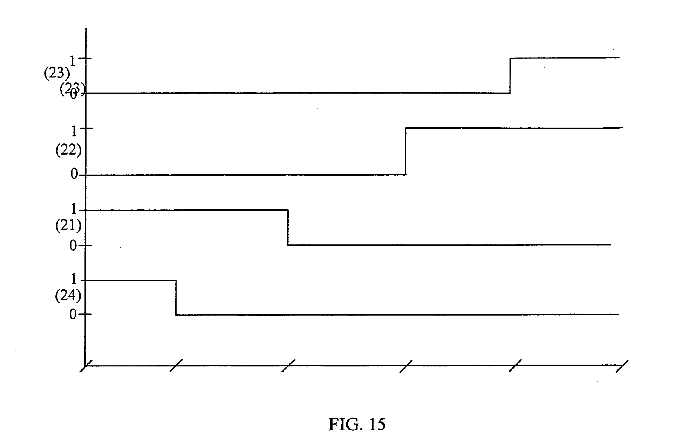

Figure 15 shows the values sent from the different sensors of the embodiment in figures 13 and 14 to the control unit in the assisted power steering system.

Independent of the number of sensors the tiller arm and the steered wheel in an assisted power steering system accompanying each other with a small error forced by the mechanical construction, the positional error and the velocity error of the power steering mechanism will be small, which may be used in the control algorithm of the system.

The driving characteristics of the truck with an assisted power steering system will also be enhanced in that one or more signals between truck logic and power steering is used to transfer support information that enhances the control algorithm. An example of such information may be desired maximum torque momentum on the steered wheel as a function of the driving velocity or truck status. Another example may be transferring of power steering status to the truck logic.

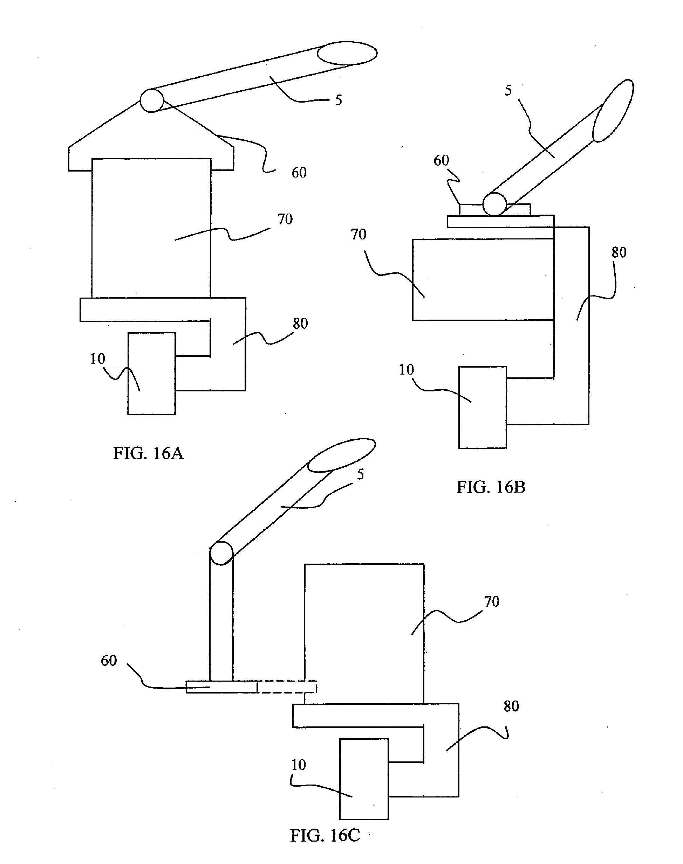

Figures 16A-16C discloses different embodiments of steering system that may comprise an assisted power steering system according to the invention. In figures 16A-16C steering arrangements are disclosed comprising a tiller arm 5, a traction motor 70, a traction gearbox 80, a steered wheel 10, and an interface between the tiller arm 5 and the steered wheel 60. Figure 16A shows a direct steering arrangement wherein the motor is rotating. Figure 16B shows an arrangement wherein the drive unit is rotating. Figure 16C shows an arrangement wherein the motor stand still and the gearbox is rotating.

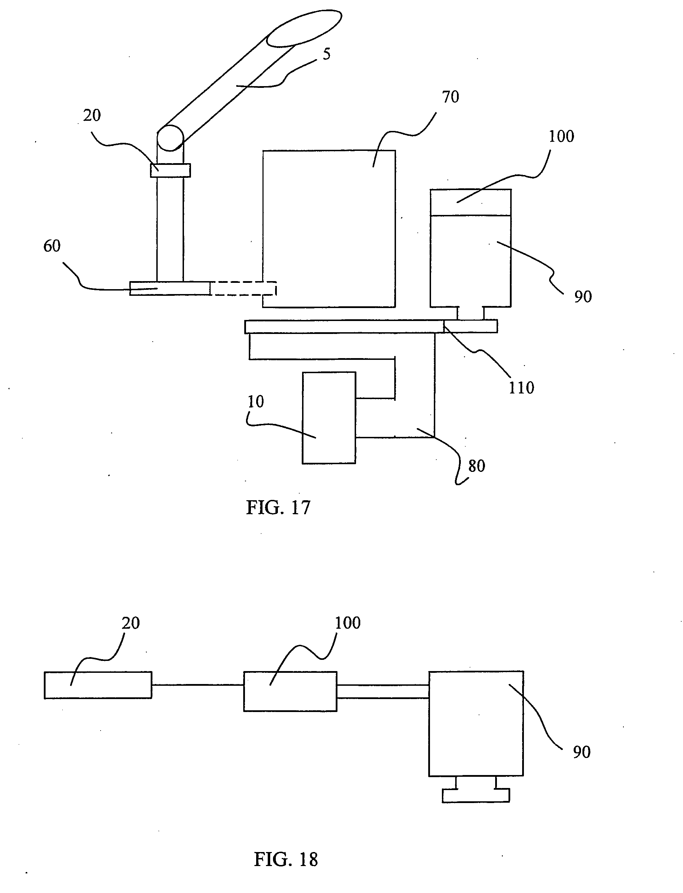

Figure 17 shows an embodiment of a steering arrangement comprising a sensor arrangement 20, wherein the motor 70 of the system is not rotating. Data from the sensor arrangement 20 is transferred to electronics 100 of the system, wherein the electronics 100 controls a steer motor 90 that through an interface 110 between the steer motor and the steered wheel causes the steered wheel 10 to rotate.

Figure 18 illustrates that the assisting power parts in figure 17, that is, the sensor arrangement 20, the electronics 100, and the steer motor 90 may be connected in any way such as through wires, wireless, or the like, and be distributed anywhere in a vehicle comprising the steering system. The parts may also be arranged as a one part arrangement.

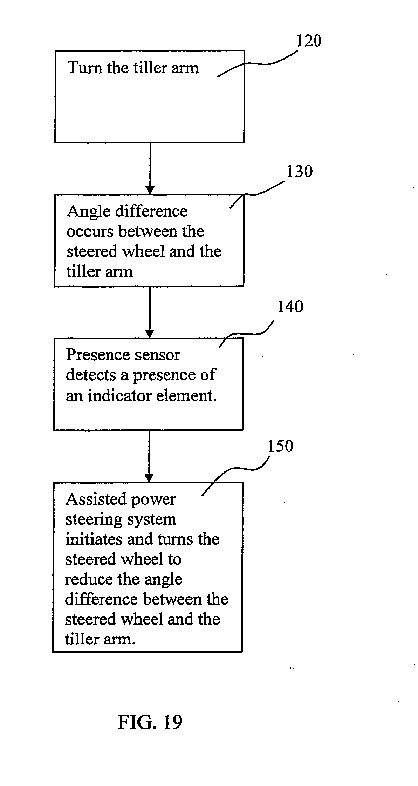

Figure 19 shows a method to steer, for example, an industrial truck with an embodiment of a steering system comprising an assisted power steering .

In step 120 the operator of the industrial truck turns the tiller arm in order to turn the vehicle.

In step 130, since, for example, the velocity of the truck is very low and friction between the steered wheel and the ground, the force applied on the tiller causes an angle difference between the tiller arm and a steered wheel to occur due to the raised momentum of the tiller arm. The angle difference results in that an indicator element arranged in connection to the tiller arm travels in a direction from an originating position, a so called centre position, relative the steered wheel.

In step 140, the indicator element moves into a sensor area of a digital presence sensor, that is, the presence sensor detects a presence of the indicator element, thereby indicating that assisted power steering is needed, by switching to an on/off state.

In step 150, a control unit of the assisted power steering system receives the indication that the angle difference between the tiller arm and the steered wheel has exceeded a pre set value and by using an energy source, such as a motor or the like, reduces the angle difference by turning the steered wheel towards the tiller arm.

When parking/stopping a tiller arm truck the friction between the steered wheel and the ground may cause the steered wheel in a displaced position relative the tiller arm. This causes the motor of the system to continuously work wearing on the system. However, when using the digital system the system accepts the difference due to the silent interval. This may result in that the life span of the steering system is increased and the energy consumption is reduced.

It should be noted that in an embodiment of the invention the force applied to assist the turning is set so that an operator of the truck may be able to over come the force from the assisted power system, in case of failure of the system.

The arrangement detecting the angle difference between the tiller arm and the steered wheel may be arranged anywhere with a play between tiller arm and the sensor, such as inside the tiller arm, laid open , close to the steered wheel and so on.

Using digital presence sensors also enhance the repeatability of the system in environment with temperature variations, since analogue sensors are more sensitive to temperature variations.

It should be understood that analogue sensors are also more sensitive and thereby easier to disturb and interfere.

The foregoing has described the principles, preferred embodiments and modes of operation of the present invention. However, the invention should be regarded as illustrative rather than restrictive, and not as being limited to the particular embodiments discussed above. It should therefore be appreciated that variations may be made in those embodiments by those skilled in the art without departing from the scope of the present invention as defined by the following claims.

## Claims

1. An assisted power steering system for assisting a turning of a steered wheel (10) of a steering system comprising an energy source (40) arranged to assist the turning of the steered wheel (10), a sensor arrangement (20) arranged to detect direction of the turning, and a control unit (30) arranged to control the energy source (40) based on data from the sensor arrangement (20), **characterized in that** the sensor arrangement (20) comprises a first digital presence sensor (21) arranged to be in either an on-state or an off-state to indicate the direction of the turning.

2. An assisted power steering system according to claim 1, wherein the energy source (40) is arranged to start by a change of state of the digital presence sensor (21).

3. An assisted power steering system according to claim 1, wherein the digital presence sensor (21) is arranged to detect a position of an indicator element (26) of the steering system.

4. An assisted power steering system according to any of claims 1 - 3,
wherein the sensor arrangement (20) comprises a second digital presence sensor (22) arranged to detect the turning in a direction opposite to the direction detected by the first digital presence sensor (21).

5. An assisted power steering system according to claim 1, wherein an arrangement to control the hysteresis is arranged in the system.

6. An assisted power steering system according to claim 4, wherein the arrangement comprises a third digital presence sensor arranged on the same side of a line extending from the centre of the steering shaft through the centre of the sensor arrangement as the first digital presence sensor (21) and a fourth digital presence sensor arranged on the same side of a centre line of the sensor arrangement as the second digital presence sensor (22), wherein the control unit of the system is arranged to initiate the energy source to merely assist the turning when both the first and the third sensor indicate a presence of an indicator element (26) or when both the second and the fourth sensor indicate a presence of an indicator element (26) or that the different sensors generate different assisting forces.

7. A steering system comprising steering means (5), such as a steering wheel or a tiller arm or the like, connected to a first upper part (12) further connected with a deflection element (13) to a second lower part (14), a steered wheel (10) connected to the second lower part (14) and an assisted power steering system according to any of claims 1 - 6.

8. A steering system according to claim 6, wherein the first upper part (12) comprises an indicator element (26) and sensor arrangement (20) is arranged to detect the presence of the indicator element (26).

9. A steering system according to claim 6, wherein a shelf arrangement (15) is secured to the second lower part (14) of the system and the sensor arrangement (20) is arranged on the shelf arrangement (15).

10. A steering system according to claim 6, wherein the second lower part (14) comprises a stopper tap (17) arranged to limit the angle difference between the tiller arm (5) and the steered wheel (10), wherein an operator of the tiller arm will turn the steered wheel (10) by own force when the first upper part (12) engages the stopper tap (17).

11. A vehicle, such as an industrial truck, a tiller truck or the like, comprising a steering system according to any of claims 7 - 10.

12. A method for assisting the turning of a steered wheel (10) of a steering system comprising the steps of:
- turning a steering means (5), such as a tiller arm, steering wheel or the like, of the steering system;
**characterized in** comprising the steps of:
- detecting an angle difference of the steering means (5) and the steered wheel (10) by a digital presence sensor arranged to be in either an on-state or an off-state to indicate the direction of turning; and
- assisting the turning of the steered wheel (10) by providing a pre set turning force to the steered wheel (10) from an energy source (40) when said detection has been made and thereby reducing the angle difference.

## Patentansprüche

1. Servolenkungssystem zum Unterstützen der Drehung eines gelenkten Rades (10) eines Lenksystems mit einer Energiequelle (40), die dazu geeignet ist, die Drehung des gelenkten Rades (10) zu unterstützen, einer Sensoranordnung (20), die dazu geeignet ist, eine Drehrichtung zu erfassen, und einer Steuereinheit (30), die dazu geeignet ist, die Energiequelle (40) basierend auf Daten von der Sensoranordnung (20) zu steuern,
**dadurch gekennzeichnet, dass**
die Sensoranordnung (20) einen ersten digitalen Präsenzsensor (Presence Sensor) (21) aufweist, der entweder im EIN- oder im AUS-Zustand angeordnet ist, um die Drehrichtung anzuzeigen.

2. System nach Anspruch 1, wobei die Energiequelle (40) dazu geeignet ist, durch eine Änderung des Zustands des digitalen Präsenzsensors (21) aktiviert zu werden.

3. System nach Anspruch 1, wobei der digitale Präsenzsensor (21) dazu geeignet ist, eine Position eines Anzeigeelements (26) des Lenksystems zu erfassen.

4. System nach einem der Ansprüche 1 bis 3, wobei die Sensoranordnung (20) einen zweiten digitalen Präsenzsensor (22) aufweist, der dazu geeignet ist, die Drehung in eine Richtung zu erfassen, die der durch den ersten digitalen Präsenzsensor (21) erfassten Richtung entgegengesetzt ist.

5. System nach Anspruch 1, wobei das System eine Anordnung zum Steuern der Hysterese aufweist.

6. System nach Anspruch 4, wobei die Anordnung aufweist:
einen dritten digitalen Präsenzsensor, der auf der gleichen Seite einer sich von der Mitte der Lenkwelle durch die Mitte der Sensoranordnung erstreckenden Linie angeordnet ist wie der erste digitale Präsenzsensor (21), und
einen vierten digitalen Präsenzsensor, der auf der gleichen Seite einer Mittellinie der Sensoranordnung angeordnet ist wie der zweite digitale Präsenzsensor (22),
wobei die Steuereinheit des Systems dazu geeignet ist, die Energiequelle nur dann zu aktivieren, um die Drehung zu unterstützen, wenn sowohl der erste als auch der dritte Sensor die Präsenz eines Anzeigeelements (26) anzeigen, oder wenn sowohl der zweite als auch der vierte Sensor die Präsenz eines Anzeigelements (26) anzeigt, oder
wobei durch die verschiedenen Sensoren verschiedene Unterstützungskräfte erzeugt werden.

7. Lenksystem mit:
einer Lenkeinrichtung (5), wie beispielsweise einem Lenkrad oder einem Gelenkarm bzw. einer Deichsel, die mit einem ersten oberen Teil (12) verbunden ist, das über ein Verformungselement (13) mit einem zweiten unteren Teil (14) verbunden ist;
einem mit dem zweiten unteren Teil (14) verbundenen gelenkten Rad (10); und
einem Servolenkungssystem nach einem der Ansprüche 1 bis 6.

8. Lenksystem nach Anspruch 6, wobei das erste obere Teil (12) ein Anzeigeelement (26) aufweist und die Sensoranordnung (20) dazu geeignet ist, die Präsenz des Anzeigeelements (26) zu erfassen.

9. Lenksystem nach Anspruch 6, wobei eine Plattenanordnung (15) am zweiten unteren Teil (14) des Systems befestigt ist und die Sensoranordnung (20) auf der Plattenanordnung (15) angeordnet ist.

10. Lenksystem nach Anspruch 6, wobei das zweite untere Teil (14) einen Anschlagzapfen (17) aufweist, der dazu geeignet ist, die Winkeldifferenz zwischen der Deichsel (5) und dem gelenkten Rad (10) zu begrenzen, wobei eine Bedienungsperson der Deichsel das gelenkte Rad (10) durch eigene Kraft drehen wird, wenn das erste obere Teil (12) mit dem Anschlagzapfen (17) in Eingriff steht.

11. Fahrzeug, wie beispielsweise ein Industriefahrzeug, mit einem Lenksystem nach einem der Ansprüche 8 bis 10.

12. Verfahren zum Unterstützen der Drehung eines gelenkten Rades (10) eines Lenksystems, mit den Schritten:
- Drehen einer Lenkeinrichtung (5), wie beispielsweise einer Deichsel oder eines Lenkrades, des Lenksystems;
**gekennzeichnet durch** die Schritte:
- Erfassen einer Winkeldifferenz zwischen der Lenkeinrichtung (5) und dem gelenkten Rad (10) **durch** einen digitalen Präsenzsensor, der entweder im EIN- oder im AUS-Zustand angeordnet ist, um die Drehrichtung anzuzeigen; und
- Unterstützen der Drehung des gelenkten Rades (10) **durch** Zuführen einer vorgegebenen Drehkraft zum gelenkten Rad (10) von einer Energiequelle (40), wen der Erfassungsschritt ausgeführt worden ist, um **dadurch** die Winkeldifferenz zu vermindern.

## Revendications

1. Système de direction assistée destiné à faciliter le braquage d'une roue directrice (10) d'un système de direction comportant une source d'énergie (40) configurée pour faciliter le braquage de la roue directrice (10), un agencement de détecteurs (20) configuré pour détecter la direction du braquage et une unité de commande (30) destinée à commander la source d'énergie (40) en fonction de données provenant de l'agencement de détecteurs (20), **caractérisé en ce que** l'agencement de détecteurs (20) renferme un premier détecteur de présence numérique (21) agencé de manière à être soit en état de marche soit à l'arrêt pour indiquer la direction de braquage.

2. Système de direction électriquement assistée selon la revendication 1, dans lequel la source d'énergie (40) est agencée pour démarrer lors d'un changement d'état du détecteur de présence numérique (21).

3. Système de direction électriquement assistée selon la revendication 1, dans lequel le détecteur de présence numérique (21) est configuré pour détecter une position d'un élément indicateur (26) du système de direction.

4. Système de direction électriquement assistée selon l'une quelconque des revendications 1 à 3, dans lequel l'agencement de détecteurs (20) comprend un second détecteur de présence numérique (22) configuré pour détecter le braquage dans une direction opposée à la direction détectée par le premier détecteur de présence numérique (21).

5. Système de direction électriquement assistée selon la revendication 1, dans lequel un agencement destiné à commander l'hystérésis est agencé dans le système.

6. Système de direction électriquement assistée selon la revendication 4, dans lequel l'agencement comprend un troisième détecteur de présence numérique agencé du même côté d'une ligne partant du centre de l'arbre de direction en passant par le centre de l'agencement de détecteurs que le premier détecteur de présence numérique (21) et un quatrième détecteur de présence numérique agencé du même côté d'une ligne centrale de l'agencement de détecteurs que le second détecteur de présence numérique (22), dans lequel l'unité de commande du système est configurée pour initier la source d'énergie de manière qu'elle facilite simplement le braquage lorsque le premier détecteur et le troisième détecteur indiquent une présence d'un élément indicateur (26) ou lorsque le second et le quatrième détecteurs indiquent une présence d'un élément indicateur (26) ou que les différents détecteurs génèrent différentes forces d'assistance.

7. Système de direction renfermant un moyen de direction (5), tel qu'un volant de direction ou un levier à main ou un dispositif analogue, connecté à une première partie supérieure (12) en outre connectée avec un élément déflecteur (13) à une seconde partie inférieure (14), une roue directrice (10) connectée à la seconde partie inférieure (14) et un système de direction assisté selon l'une quelconque des revendications 1-6.

8. Système de direction selon la revendication 6, dans lequel la première partie supérieure (12) comprend un élément indicateur (26) et un agencement de détecteurs (20) est configuré pour détecter la présence de l'élément indicateur (26).

9. Système de direction selon la revendication 6, dans lequel un agencement de tablette (15) est fixé à la seconde partie inférieure (14) du système et l'agencement de détecteurs (20) est disposé sur l'agencement de tablette (15).

10. Système de direction selon la revendication 6, dans lequel la seconde partie inférieure (14) renferme une butée (17) configurée de manière à limiter la différence d'angle entre le levier à main (5) et la roue directrice (10), dans lequel un opérateur du levier à main braque la roue directrice (10) par sa propre force lorsque la première partie supérieure (12) vient au contact de la butée (17).

11. Véhicule, tel qu'un chariot de manutention, un chariot à timon ou analogue, renfermant un système de direction selon l'une quelconque des revendications 7 à 10.

12. Procédé visant à faciliter le braquage d'une roue directrice (10) d'un système de direction comportant les étapes suivantes :
- braquer un moyen de direction (5), tel qu'un levier à main, un volant de direction ou un dispositif analogue, du système de direction ;
**caractérisé en ce qu'**il comprend les étapes consistant à :
- détecter une différence d'angle du moyen de direction (5) et de la roue directrice (10) au moyen d'un détecteur de présence numérique agencé de manière à être soit en état de marche soit à l'arrêt pour indiquer la direction de braquage ; et
- faciliter le braquage de la roue directrice (10) en fournissant une force de braquage préréglée provenant d'une source d'énergie (40) à la roue directrice (10), lorsque ladite détection est effectuée et en réduisant donc la différence d'angle.
